# EUROPÄISCHE PATENTSCHRIFT

(11) **EP 0 955 712 B1**
(45) Veröffentlichungstag und Bekanntmachung des Hinweises auf die Patenterteilung: **30.01.2002**
(21) Anmeldenummer: 99106259.7
(22) Anmeldetag: 19.04.1999
(51) Int. Cl.: H02G 9/00, F03G 7/04

(54) **Verfahren zum Abführen der Verlustleistung**
Method for removing power loss
Méthode d évacuationdes pertes de puissance

(30) Priorität: 07.05.1998 DE 19820379
(43) Veröffentlichungstag der Anmeldung: 10.11.1999
(73) Patentinhaber: Felten & Guilleaume Kabelwerke GmbH, 51063 Köln (DE)
(72) Erfinder: Brakelmann, Heinrich Prof. Dr.-Ing., 47495 Rheinberg (DE); Rasquin, Werner Prof. Dr.-Ing., 50668 Köln (DE)

(56) Entgegenhaltungen:
- DE-A- 2 832 881
- DE-A- 4 131 990

## Beschreibung

Die Erfindung betrifft ein Verfahren zur regenerativen Nutzung der Verlustleistung mindestens eines Starkstromkabels.

Im Normalbetrieb können Hochleistungskabelanlagen Verlustleistungen bis zu 50 W/m oder mehr entwickeln. Mit zunehmender Verlustleistung ist ohne Kühlung die Leistungsfähigkeit eines Starkstromkabels oder einer Kabelanlage begrenzt. Es sind schon vielfältige Vorrichtungen zur direkten oder indirekten Kühlung von Starkstromkabeln vorgeschlagen worden. Eine gewisse Übersicht über die Möglichkeiten der Wärmeableitung oder der Kühlung ist in einer Broschüre von SIEMENS von-1976 beschrieben (Künstlich gekühlte Kabel bis 420 kV; Best.-Nr. J 113/1057). Ein anderes Anwendungsbeispiel der Kabelkühlung mittels Wärmerohren findet sich in der DE 2832881 A1. Diese und andere ähnliche Systeme haben den Nachteil, daß die Verlustleistung ohne weitere Nutzung an die Umgebung abgegeben wird.

Es gibt bereits verschiedene Vorschläge, die thermische Verlustleistung bei der Stromerzeugung regenerativ zu nutzen. Am bekanntesten sind hier Blockheizkraftwerke, bei denen der Stromerzeugung ein Heizkraftwerk nachgeschaltet ist. Andere Maßnahmen beruhen auf dem Einsatz von Wärmepumpensystemen. Wärmepumpen heben die Verlustleistung auf ein höheres Temperatumiveau, wodurch eine weitere thermische Nutzung möglich ist. Wärmepumpen werden auch zur Nutzung der natürlichen Umgebungswärme von Luft, Wasser oder Erdreich für Raumheizzwecke eingesetzt und sind daher ausgereifte technische Anlagen.

Ein Vorschlag, die thermische Verlustleistung elektrischer Energietransportleitungen regenerativ zu nutzen, ist bisher nicht bekannt geworden.

Es ist daher Aufgabe der Erfindung, die Verlustleistung eines Starkstromkabels oder einer Starkstromkabelanlage einer nützlichen Verwendung zuzuführen.

Die Lösung besteht darin, daß die Verlustleistung über mindestens ein einen fluiden Wärmeträger führendes Rohr abgeführt wird und die Verlustleistung direkt oder indirekt in ein Energieliefersystem eines Verbrauchers überführt wird.

Die Vorteile der Erfindung sind je nach Ausgestaltung vielfältig. Besonders eignet sich das Verfahren zur Ergänzung von solarthermischen Anlagen mit thermischen Speichern, insbesondere Erdwärmespeichern. Bei Verwendung des umgebenden Erdreichs für die Speicherung der Verlustleistung oder auch wenn schon Speicher anderer Art (z.B. große unterirdische Wassertanks) bzw. geeignete Verbrauchssysteme bestehen, sind keine gesonderten Investitionen für Errichtung spezieller Zusatzeinrichtung zur Aufnahme der Verlustleistung notwendig.

Die Unterkühlung von vorhandenen Speichem läßt sich vermeiden, da Starkstromkabel in der Regel ganzjährig in Betrieb sind.

Mit der Erfindung kann auch auf gesonderte Kühlstationen für die Starkstromkabelkühlung verzichtet werden.

Unter direkter Zufuhr der Verlustleistung in das Energieliefersystem wird verstanden, wenn die Verlustleistung ohne Zwischenschaltung von thermischer Zwischenspeicherung oder ohne zeitliche Verzögerung direkt einem Verbraucher zugeführt wird. Direkte Zufuhr kann beispielsweise heißen, daß die Wärmeträgerleitung in direkter Verbindung mit dem Heizsystem bzw. dem Heizwärmespeicher in den Räumlichkeiten eines Verbrauchers steht.

Eine andere Art der Wärmezufuhr kann über eine zwischengeschaltete Station erfolgen. Die Zwischenstation kann mindestens eine Umwälzpumpe, mindestens einen Wärmetauscher und/oder mindestens eine Wärmepumpe umfassen. Die unter diesem Aspekt definierte Zwischenstation wird jeweils nach Anwendungsfall oder Auslegung der Anordnung ausgestattet sein.

Im Fall der Zwischenspeicherung bietet sich besonders das Erdreich an, in dem das Starkstromkabel liegt. Auch einem Erdreichwärmespeicher, der in der Nähe vorhanden ist, kann die Verlustleistung zugeführt werden. Das erfindungsgemäße System kann auch so ausgestaltet sein, daß die Erdsonden zur Überführung der Kabelverlustleistung ebenfalls dafür benutzt werden, solare Überschußwärme in das Erdreich oder in einen Erdwärmespeicher zu überführen. Bei dieser Maßnahme wird quasi das erfindungsgemäße System in ein solares Speichersystem integriert. Der Erfindung hat also auch den Vorteil, thermische Solarwärmeanlagen zu ergänzen.

Da in Erdschichten in einigen Metern Tiefe je nach Bodenbeschaffenheit und Wasserführung eine nahezu einheitliche Temperatur von etwa 10 bis 15 °C herrscht, kann zu jeder Zeit des Jahres ein Starkstromkabel unter Aufladung eines Erdwärmespeichers gekühlt werden. Bei Hochleistungskabeln ist durchschnittlich mit einer Verlustleistung von bis zu 50 W/m zu rechnen, bei Vollast können die Verluste noch größer sein. Ein Starkstromkabel kann also einen wesentlichen Zusatzbeitrag an Energie für einen Verbraucher liefern.

Die Verlustleistung kann über Erdsonden in das Erdreich geleitet werden. Solche Anordnungen sind bekannt, wobei je nach Bodenbeschaffenheit bzw. -gegebenheit oder auch Lage eines Erdwärmespeichers, die Erdsonden ausgehend vom Kabelgraben senkrecht, schräg oder auch flach in das Erdreich gestoßen werden könne. Vorzugsweise kann auch zusätzlich ein Latentwärmespeicher in der Nähe der Erdsonden eingesetzt werden, wobei dabei der vorteilhafte Effekt eintritt, daß ein scharfer Begrenzung der Temperaturanhebung erreicht wird.

Die elektrische Antriebsenergie einer Umwälzpumpe für den Wärmeträger und/oder einer Wärmepumpe kann aus dem Starkstromkabel bezogen werden. Hierzu können Anordnung herangezogen werden, wie sie beispielsweise in der DE 3627149 A1 beschrieben sind.

Gemäß den unterschiedlichen Ausgestaltungen der Erfindung, können vom Fachmann entsprechende Anordnungen von Wärmeträgerrohren, Speichern, Zwischenspeichern, Erdsonden, Pumpen, Übergabestationen usw. entwickelt oder gestaltet werden.

Ein oder mehrere Wärmeträgerrohre können außerhalb des Starkstromkabels liegen oder direkt als Bündelkühlung im Starkstromkabel integriert sein. Als Beispiel für Bündelkühlung sei die DE 4209928 C1 zitiert.

Das Wärmeträgerrohr kann in die Nähe thermisch besonders beanspruchter Teile - insbesondere Gamituren - des Starkstromkabels oder der Starkstromkabelanlage gelegt werden. Mit dieser Anordnung können vorzugsweise Endverschlüsse oder Verbindungsmuffen oder sonstige hot-spots in der Kabelanlage thermisch entlastet werden.

Die beschriebene Anordnung oder auch Teile davon können integraler Bestandteil eines Energieliefersystems eines Verbrauchers sein; wobei besonders die Wärmeträgerrohre oder die Erdsonden infrage kommen.

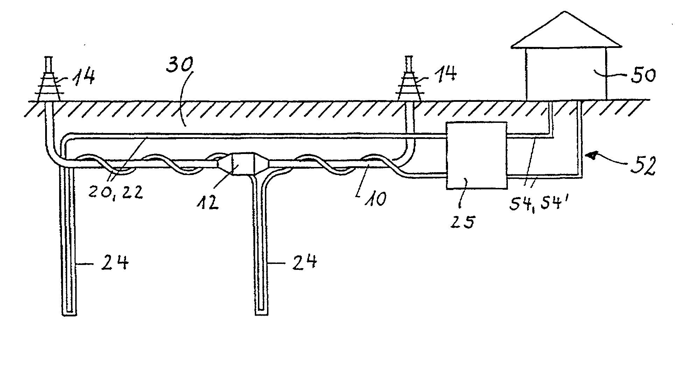

Ein Ausführungsbeispiel der Erfindung wird schematisch in der einzigen Figur dargestellt.

Die Figur zeigt ein Starkstromkabel 10 mit einem einen flüssigen Wärmeträger führenden Rohr 20,22, wobei ein Rohrstrang als Vorlauf und der andere Rohrstrang als Rücklauf zu verstehen ist. Das Wärmeträgerrohr ist an eine Verbindungsmuffe 12 herangeführt. Die Verlustleistung der Starkstromkabelanlage wird dem Energieliefersystem 52 eines Verbraucher 50 unter Einschaltung einer Zwischenstation 25 und weiterer wärmeführender Leitungen 54,54' zugeführt, wobei in der Zwischenstation 25 ein Zwischenspeicher, eine Umwälzpumpe, ein Wärmetauscher und/oder eine Wärmepumpe untergebracht sein kann. Zwei Erdsonden 24 stehen unter direktem Durchfluß des Wärmeträgers, so daß die Verlustleistung kabelabschnittsweise getauscht wird, bevor es in das Erdreich 30 abgegeben wird. Mit Bezugszeichen 14 sind zwei Kabelendverschlüsse gezeigt, die mit der Anordnung ebenfalls thermisch entlastet werden können.

## Patentansprüche

1. Verfahren zur regenerativen Nutzung der Verlustleistung mindestens eines Starkstromkabels (10), wobei die Verlustleistung über mindestens ein einen fluiden Wärmeträger führendes Rohr (20,22) abgeführt wird und wobei die Verlustleistung direkt oder indirekt in ein Energieliefersystem (52) eines Verbrauchers (50) überführt wird.

2. Verfahren nach Anspruch 1, **dadurch gekennzeichnet, daß** die Verlustleistung unter Einschaltung einer Zwischenstation (25) überführt wird.

3. Verfahren nach Anspruch 1 oder 2, **dadurch gekennzeichnet, daß** die Verlustleistung unter Einschaltung eines Zwischenspeichers (30) überführt wird.

4. Verfahren nach Anspruch 3, **dadurch gekennzeichnet, daß** die Verlustleistung einem Latentwärmespeicher überführt wird.

5. Verfahren nach Anspruch 3 oder 4, **dadurch gekennzeichnet, daß** die Verlustleistung dem umgebenden Erdreich (30) zugeführt wird.

6. Verfahren nach Anspruch 5, **dadurch gekennzeichnet, daß** die Verlustleistung über Erdsonden (24) in das Erdreich (30) geführt wird.

7. Verfahren nach einem der vorhergehenden Ansprüche, **dadurch gekennzeichnet, daß** die Antriebsenergie einer Wärmeträgerumwälzpumpe (25) und/oder einer Wärmpumpe aus dem Starkstromkabel (10) bezogen wird.

## Claims

1. A method of regeneratively using the power lost from at least one heavy-current cable (10), wherein the lost power is dissipated via at least one pipe (20, 22) conducting a fluid heat transfer medium and wherein the lost power is transmitted directly or indirectly to an energy supply system (52) of a consumer device (50).

2. A method according to claim 1, **characterised in that** the lost power is transmitted with the interposition of an intermediate station (25).

3. A method according to claim 1 or 2, **characterised in that** lost power is transmitted with the interposition of an intermediate store (30).

4. A method according to claim 3, **characterised in that** the lost power is transmitted to a latent heat store.

5. A method according to claim 3 or 4, **characterised in that** the lost power is fed to the surrounding earth (30).

6. A method according to claim 5, **characterised in that** the lost power is fed into the earth (30) via earth probes (24).

7. A method according to any one of the preceding claims, **characterised in that** the driving power of a heat-transfer circulating pump (25) and/or a heat pump is drawn from the heavy-current cable (10).

## Revendications

1. Procédé pour récupérer les pertes en puissance d'au moins un câble à courant fort (10), dans lequel les pertes en puissance sont canalisées par un tube (20, 22) véhiculant un caloporteur liquide et dans lequel les pertes en puissance sont transférées directement ou indirectement à un système fournisseur d'énergie (52) d'un consommateur (50).

2. Procédé selon la revendication 1, **caractérisé en ce que** les pertes en puissance sont transférées par la mise en circuit d'une station intermédiaire (25).

3. Procédé selon la revendication 1 ou 2, **caractérisé en ce que** les pertes en puissance sont transférées par la mise en circuit d'un accumulateur intermédiaire (25).

4. Procédé selon la revendication 3, **caractérisé en ce que** les pertes en puissance sont transférées à un accumulateur de chaleur latente.

5. Procédé selon la revendication 3 ou 4, **caractérisé en ce que** les pertes en puissance sont amenées à la terre environnante (30).

6. Procédé selon la revendication 5, **caractérisé en ce que** les pertes en puissance sont transférées à la terre environnante (30) par des sondes enfouies (24).

7. Procédé selon l'une quelconque des revendications précédentes, **caractérisé en ce que** l'énergie d'entraînement d'une pompe de circulation de caloporteur (25) et/ou d'une pompe à chaleur est tirée du câble à courant fort (10).
